# FASCICULE DE BREVET EUROPEEN

(11) **EP 2 859 631 B1**
(45) Date de publication et mention de la délivrance du brevet: **17.08.2016**
(21) Numéro de dépôt: 13733362.1
(22) Date de dépôt: 06.06.2013
(51) Int. Cl.: H02G 3/14

(54) **PLAQUE DE FINITION EQUIPEE DE MOYENS DE CENTRAGE SUR UN ELEMENT INTERNE D'UN APPAREILLAGE ELECTRIQUE**
ENDMASKENPLATTE MIT ZENTRIERUNGSMITTELN FÜR EIN INNENELEMENT VON EINEM ELEKTRISCHEN APPARAT
FINISHING PLATE WITH CENTERING MEANS FOR AN INTERNAL ELEMENT OF AN ELECTRICAL DEVICE

(30) Priorité: 08.06.2012 FR 1201658
(43) Date de publication de la demande: 15.04.2015
(73) Titulaire: Legrand France, 87000 Limoges (FR); Legrand SNC, 87000 Limoges (FR)
(72) Inventeur: DUMAS, Eric, F-87340 La Jonchère Saint Maurice (FR); GOURINCHAS, Laurent, F-87700 Aixe sur Vienne (FR); MOURGAUD, Jean-François, F-87220 Feytiat (FR); PUYBARAUD, Eric, F-87170 Isle (FR)
(74) Mandataire: Orsini, Fabienne
(86) Numéro de dépôt international: PCT/FR2013/051297
(87) Numéro de publication internationale: WO 2013/182819

(56) Documents cités:
- EP-A2- 2 270 941
- US-A- 5 744 750
- US-A1- 2005 181 665
- US-A1- 2011 056 720
- US-B1- 7 531 745

## Description

### DOMAINE TECHNIQUE AUQUEL SE RAPPORTE L'INVENTION

La présente invention concerne de manière générale les appareillages électriques (prises de courant, interrupteurs, va-et-vient, prises réseau ou de téléphone, capteurs de lumière, de son ou de mouvement, ...) à installer dans ou à l'extérieur de bâtiments.

Elle concerne plus particulièrement une plaque de finition pour appareillage électrique comportant des pattes d'encliquetage qui présentent chacune une languette flexible et au moins un cran qui s'étend en saillie de cette languette flexible pour s'accrocher à un élément interne dudit appareillage électrique.

Elle concerne aussi un appareillage électrique comportant un support d'appareillage et une telle plaque de finition.

### ARRIERE-PLAN TECHNOLOGIQUE

On connaît notamment du document US 2004/0257181, une plaque de finition telle que précitée qui comprend des couples de pattes d'encliquetage positionnées dos à dos. Les pattes d'encliquetage de chaque couple portent à leurs extrémités libres deux crans orientés à l'opposé l'un de l'autre. Lorsque les couples de pattes d'encliquetage de la plaque de finition sont engagés dans les ouvertures correspondantes d'un élément interne d'un appareillage électrique, les deux pattes d'encliquetage de chaque couple se courbent élastiquement dans des sens opposés pour se rapprocher l'une de l'autre afin que leurs crans s'accrochent à l'arrière du bord de cette ouverture.

L'inconvénient majeur d'une telle plaque de finition est que la flexibilité des pattes d'encliquetage ne permet pas d'assurer un centrage parfait de la plaque de finition par rapport à l'élément interne de l'appareillage électrique.

Il est alors nécessaire de prévoir sur l'élément interne de l'appareillage électrique et sur la plaque de finition des moyens supplémentaires permettant d'assurer cette fonction de centrage, au détriment de la simplicité de fabrication et d'assemblage de ces éléments.

On connaît par ailleurs du document EP2270941 un enjoliveur qui comporte une paroi frontale bordée à l'arrière par un rebord périphérique, et deux ensembles de pattes permettant de retenir cet enjoliveur sur un support. Chaque ensemble de pattes comporte une patte d'encliquetage centrale, flanquée de deux pattes d'ajustement.

Dans ce document, il n'est prévu aucun élément pour optimiser le centrage de l'enjoliveur sur le support.

On connaît également du document US2005/0181665 un mécanisme d'appareillage à engager dans une boîte électrique, qui est prévu pour être recouvert par une plaque d'habillage. Les moyens de fixation de la plaque d'habillage sur le mécanisme d'appareillage comportent des pions fendus en croix, qui sont adaptés à passer au travers d'ouvertures prévues dans le support du mécanisme d'appareillage.

Dans ce document, il n'est prévu aucun élément pour optimiser le centrage de la plaque d'habillage sur le mécanisme d'appareillage.

### OBJET DE L'INVENTION

Afin de remédier à l'inconvénient précité de l'état de la technique, la présente invention propose une nouvelle plaque de finition dans laquelle les pattes d'encliquetage assurent par elle-même le centrage de la plaque de finition par rapport à l'élément interne sur lequel elle est montée.

Plus précisément, la présente invention propose une première plaque de finition telle que définie dans la revendication 1.

La présente invention propose également une seconde plaque de finition telle que définie dans la revendication 9.

Dans ces deux modes de réalisation de l'invention, la fente ou la direction oblique des crans permet de centrer parfaitement la plaque de finition par rapport à l'élément interne sur lequel elle est montée, sans qu'il soit nécessaire d'avoir recours à un quelconque autre artifice.

Plus précisément, la fente, en coopérant avec un ergot prévu en correspondance sur l'élément interne, permet de remplir parfaitement cette fonction, car ici les deux parties de la patte d'encliquetage n'étant pas prévus pour s'écarter ou se rapprocher l'une de l'autre, la fente forme un rail dans lequel l'ergot peut coulisser et se centrer.

De la même manière, les crans, en coopérant avec des griffes inclinées en correspondance sur l'élément interne, permettent de remplir parfaitement cette fonction, car une fois la plaque de finition plaquée sur l'élément interne, les crans empêchent tout déplacement latéral de la plaque de finition sur cet élément interne.

On observera enfin que la plaque de finition selon l'invention ne pourra se monter que sur un élément interne dédié, qui sera conçu de telle manière qu'il ne pourra pas recevoir d'autres plaques de finition. Ainsi, les pattes d'encliquetage formeront un moyen de détrompage pour le montage de cette plaque de finition sur l'élément interne dédié spécifique, conçu de manière à présenter une sécurité électrique élevée. Il ne sera donc pas possible d'associer un élément interne avec une plaque de finition dont la sécurité électrique sera réduite, au bénéfice de la sécurité électrique de l'ensemble.

D'autres caractéristiques avantageuses et non limitatives de la première plaque de finition conforme à l'invention sont définies en revendications 2 à 8.

D'autres caractéristiques avantageuses et non limitatives de la seconde plaque de finition conforme à l'invention sontdefinies en revendications 10 à 14.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un premier mode de réalisation de la plaque de finition selon l'invention et du support qui lui est associé ;
- la figure 2 est une vue schématique en perspective d'une partie d'accrochage du support de la figure 1 ;
- la figure 3 est une vue schématique en perspective du dessous de la plaque de finition de la figure 1 ;
- la figure 4 est une vue de détail de la zone IV de la figure 3 ;
- la figure 5 est une vue schématique en perspective assemblée de la plaque de finition et du support de la figure 1 ;
- la figure 6 est une vue de détail de la zone VI de la figure 5 ;
- la figure 7 est une vue schématique en perspective éclatée d'un second mode de réalisation de la plaque de finition selon l'invention et du support qui lui est associé ;
- la figure 8 est une vue schématique en perspective d'une partie d'accrochage du support de la figure 7 ;
- la figure 9 est une vue schématique en perspective du dessous de la plaque de finition de la figure 7 ;
- la figure 10 est une vue de détail de la zone X de la figure 9 ;
- la figure 11 est une vue schématique en perspective éclatée d'un troisième mode de réalisation de la plaque de finition selon l'invention et du support qui lui est associé ;
- la figure 12 est une vue schématique en perspective d'une partie d'accrochage du support de la figure 11 ;
- la figure 13 est une vue schématique en perspective du dessous de la plaque de finition de la figure 11 ;
- la figure 14 est une vue de détail de la zone XIV de la figure 13 ;
- la figure 15 est une vue schématique en perspective éclatée d'un quatrième mode de réalisation de la plaque de finition selon l'invention et du support qui lui est associé ;
- la figure 16 est une vue schématique en perspective d'une partie d'accrochage du support de la figure 15 ;
- la figure 17 est une vue schématique en perspective du dessous de la plaque de finition de la figure 15 ;
- la figure 18 est une vue de détail de la zone XVIII de la figure 17.

La description qui va suivre porte sur un appareillage électrique du type prise de courant, interrupteur, va-et-vient, prise réseau ou de téléphone, capteur de lumière, de son ou de mouvement, ...

Cet appareillage électrique est ici conçu pour être engagé dans une boîte murale encastrée dans un orifice pratiqué dans une paroi. Il pourrait également être conçu pour être engagé dans une boîte murale rapportée en saillie sur une paroi.

Dans la suite de la description, les termes « avant » et « arrière » seront alors utilisés par rapport à la direction du regard de l'installateur de l'appareillage électrique vers cette paroi, l'avant désignant le côté tourné vers l'installateur et l'arrière désignant le côté tourné vers le fond de l'orifice pratiqué dans la paroi.

Dans cette description, les différents composants de cet appareillage électrique seront par ailleurs décrits à l'état non déformé, lorsqu'aucun effort n'est exercé sur eux.

Dans la description, les éléments identiques ou similaires des différents modes de réalisation de l'invention représentés sur les différentes figures seront, dans la mesure du possible, référencés par les mêmes signes de référence et ne seront pas décrits à chaque fois.

Un appareillage électrique comporte généralement un mécanisme d'appareillage, un support d'appareillage et une plaque de finition.

Le mécanisme d'appareillage est l'élément qui permet à l'appareillage électrique de remplir sa fonction. Un tel mécanisme d'appareillage sera par exemple formé, dans le cas d'une prise de courant, d'un socle qui loge des bornes de connexion électrique à connecter au réseau électrique local et des alvéoles de réception des broches d'une fiche électrique, et d'un enjoliveur qui ferme le socle à l'avant et qui délimite un puits de réception de la fiche électrique.

Le support d'appareillage est quant à lui conçu pour recevoir fixement le socle du mécanisme d'appareillage et le bloquer dans la boîte murale.

Enfin, la plaque de finition est conçue pour se fixer sur le support d'appareillage afin de le recouvrir esthétiquement et de border l'enjoliveur du mécanisme d'appareillage.

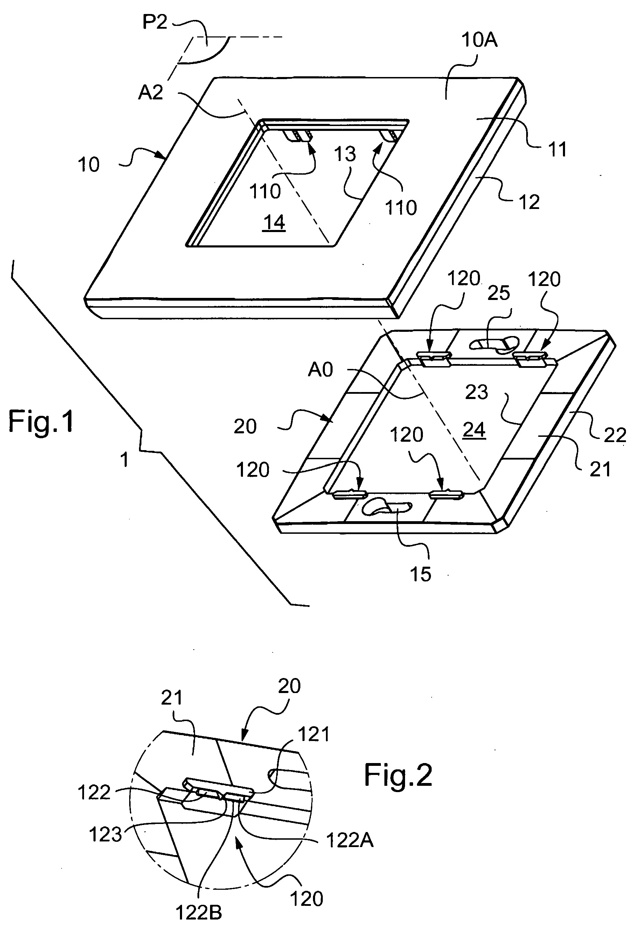

Sur les figures 1, 7, 11 et 15, on a représenté quatre modes de réalisation d'un ensemble 1 formé d'une plaque de finition 10 et d'un support d'appareillage 20.

Dans ces quatre modes de réalisation, le support d'appareillage 20 forme une pièce distincte du socle du mécanisme d'appareillage (non représenté). En variante, on pourrait bien entendu prévoir que le support d'appareillage vienne de formation avec le socle du mécanisme d'appareillage.

Ici, comme le montrent les figures 1, 7, 11 et 15, le support d'appareillage 20 comporte un cadre 21 plat de forme carrée.

Ce cadre 21 comporte ainsi quatre branches planes, et est défini entre un bord périphérique extérieur 22 et un bord périphérique intérieur 23 qui délimite une ouverture centrale 24 de forme carrée. L'axe de ce cadre 21, qui est défini comme l'axe qui passe au centre de cette ouverture centrale 24 et qui est orthogonal aux branches, est appelé axe principal A0.

Comme on peut le voir sur les figures 1, 7, 11 et 15, le support d'appareillage 20 comporte des moyens d'assujettissement 25 propres à permettre sa fixation sur la boîte murale (non représentée).

Ces moyens d'assujettissement comprennent classiquement, dans chacune de deux branches opposées du cadre 21, un perçage 25 en forme de trou de serrure, avec une partie circulaire qui permet le passage de la tête d'une vis de fixation vissée dans un puits de vissage prévu en correspondance dans la boîte murale, et une partie allongée de largeur réduite qui permet le passage du corps fileté de cette vis de fixation.

Le support d'appareillage 20 comporte également des moyens de fixation du socle du mécanisme d'appareillage (non représenté). Ces moyens de fixation, qui ne sont pas représentés sur les figures, pourraient par exemple être formés par des nervures situées sur le bord périphérique intérieur 23 du cadre 21, auxquelles pourraient s'accrocher des moyens d'encliquetage prévus en correspondance sur le socle du mécanisme d'appareillage.

Ici, le support d'appareillage 20 est réalisé d'une seule pièce par moulage d'une matière plastique. En variante, il pourrait être réalisé à partir d'un feuillard métallique découpé et plié à la forme souhaitée. Ce feuillard métallique découpé et plié pourrait alors être surmoulé d'une couche en matière plastique.

Dans les quatre modes de réalisation représentés sur les figures, la plaque de finition 10 comporte quant à elle un cadre 11 de forme carrée.

Ce cadre 11 comporte ainsi quatre branches, et est défini entre un bord périphérique extérieur 12 et un bord périphérique intérieur 13 qui délimite une ouverture centrale 14 de forme carrée.

L'axe du cadre 11, qui est défini comme l'axe qui passe au centre de l'ouverture centrale 14 et qui est orthogonal aux branches, est appelé axe principal A2. Il est destiné à se confondre avec l'axe principal A0 du cadre 21 du support d'appareillage 20 après assemblage de celui-ci avec la plaque de finition 10.

Les faces avant 10A et arrière 10B de ce cadre 11 sont ici parfaitement planes. Le plan moyen P2 de la face arrière 10B est donc ici confondu avec celle-ci.

En variante, on pourrait prévoir que la face avant du cadre de la plaque de finition présente une légère courbure, de manière que le bord périphérique extérieur du cadre présente une épaisseur inférieure à celle du bord périphérique intérieur.

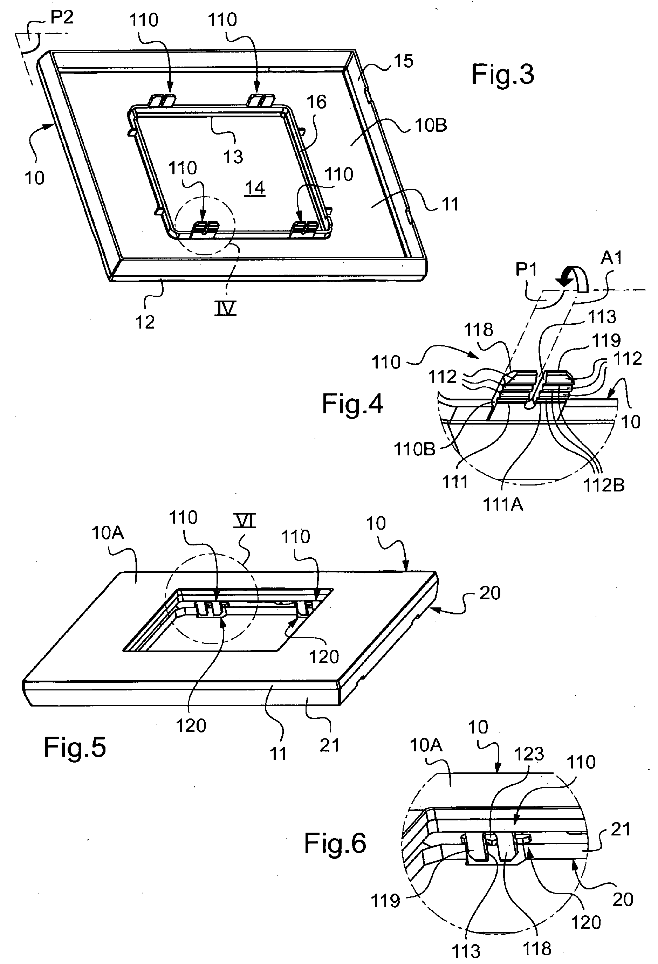

Comme on peut le voir sur les figures 3, 9, 13 et 17, la plaque de finition 10 est bordée en face arrière 10B par un rebord périphérique extérieur 15 et par un rebord périphérique intérieur 16, qui délimitent avec la face arrière 10B un logement pour le support d'appareillage 20.

Le rebord périphérique intérieur 16 est plus particulièrement formé par une nervure de section rectangulaire, qui longe le bord périphérique intérieur 13 du cadre 11 et qui s'élève à partir de la face arrière 10B du cadre 11, orthogonalement à celui-ci.

Ici, cette plaque de finition 10 est réalisée d'une seule pièce par moulage d'une matière plastique. En variante, elle pourrait être réalisée autrement, par exemple par la superposition d'une sous-plaque en matière plastique et d'une sur-plaque en matériau plus noble, tel que le métal brossé ou le bois.

Comme le montrent les figures 1, 7, 11 et 15, pour sa fixation au support d'appareillage 20, la plaque de finition 10 comporte des pattes d'encliquetage 110 ; 210 ; 310 ; 410 qui s'étendent à partir de la face arrière 10B du cadre 11 et qui sont adaptées à s'accrocher à des parties d'accrochage 120 ; 220 ; 320 ; 420 prévues en correspondance sur le support d'appareillage 20.

Dans les quatre modes de réalisation représentés sur les figures, la plaque de finition 10 comporte plus précisément quatre pattes d'encliquetage 110 ; 210 ; 310 ; 410 qui s'étendent vers l'arrière, à partir de la face arrière du rebord périphérique intérieur 16. Ces quatre pattes d'encliquetage 110 ; 210 ; 310 ; 410 s'étendent perpendiculairement à la face arrière 10B du cadre 11 de la plaque de finition 10.

Ici, ces quatre pattes d'encliquetage 110 ; 210 ; 310 ; 410 s'étendent par paires, à partir de deux côtés opposés du rebord périphérique intérieur 16, les deux pattes d'encliquetage 110 ; 210 ; 310 ; 410 de chaque paire étant situées à distance l'une de l'autre.

Chaque patte d'encliquetage 110 ; 210 ; 310; 410 comporte plus précisément une languette flexible 111 ; 211 ; 311 ; 411, s'étendant en hauteur (par rapport au cadre 11) suivant un axe longitudinal A1 parallèle à l'axe principal A2, et au moins un cran 112 ; 212 ; 312 ; 412 s'étendant en longueur suivant la largeur de la languette flexible 111 ; 211 ; 311 ; 411.

Dans les quatre modes de réalisation représentés sur les figures, chaque languette flexible 111 ; 211 ; 311 ; 411 présente une forme de plaquette rectangulaire de faible épaisseur, dont les deux faces principales (interne et externe) sont parallèles aux faces interne et externe du bord correspondant du rebord périphérique intérieur 16.

Chaque patte d'encliquetage 110 ; 210 ; 310 ; 410 s'étend ainsi selon un plan médian de référence P1, situé à égale distance des faces interne et externe 111A ; 211A ; 311A ; 411A de la languette flexible 111 ; 211 ; 311 ; 411.

Chaque languette flexible 111 ; 211 ; 311 ; 411 présente deux tranches latérales et une tranche arrière, qui se raccorde ici aux tranches latérales par deux coins biseautés.

La hauteur de chaque languette flexible est ici égale à 4,7 mm, tandis que sa largeur est égale à 6,9 mm et que son épaisseur est égale à 0,9 mm.

Les crans 112 ; 212 ; 312 ; 412 prévus sur les languettes flexibles 111 ; 211 ; 311 ; 411 sont ici situés en saillie des faces externes 111A ; 211A ; 311A ; 411A de ces languettes flexibles 111 ; 211 ; 311 ; 411 (faces tournées vers l'extérieur, c'est-à-dire vers le support d'appareillage). Ces crans 112 ; 212 ; 312 ; 412 sont parallèles entre eux.

Il est ici plus précisément prévu trois crans 112 ; 212 ; 312 ; 412 sur chaque languette flexible 111 ; 211 ; 311 ; 411.

Ces trois crans 112; 212 ; 312 ; 412 présentent des sections transversales de formes identiques, à savoir triangulaires.

Comme le montre bien la figure 4, chaque cran présente ainsi une face arrière inclinée vers l'extérieur du cadre 11, qui forme une pente pour faciliter le montage des pattes d'encliquetage 110; 210; 310; 410 sur les parties d'accrochage 120 ; 220 ; 320 ; 420 du support d'appareillage 20.

Comme le montre bien cette même figure 4, chaque cran présente en outre une face avant 112B tournée vers le plan moyen P2 de la face arrière 10B du cadre 11 et parallèle à celle-ci, adaptée à coopérer avec les parties d'accrochage 120 ; 220 ; 320 ; 420 pour fixer rigidement la plaque de finition 10 au support d'appareillage 20.

Les quatre parties d'accrochage 120 ; 220 ; 320 ; 420 prévues sur le support d'appareillage 20 sont alors situées par paires, en saillie de deux côtés opposés du bord périphérique intérieur 23 du cadre 21, de telle sorte que les crans 112 ; 212 ; 312 ; 412 de la plaque de finition 10 puissent s'y accrocher.

En variante, on pourrait prévoir que les languettes flexibles soient situées sur le bord périphérique intérieur 13 du cadre 11 et que les crans soient situés sur les faces internes des languettes flexibles. Alors, contrairement aux modes de réalisation représentés où les faces avant 112B des crans 112 sont tournées vers la face arrière 10B du cadre 11, les faces avant de ces crans seraient tournées vers le plan moyen de l'ouverture centrale 14 du cadre 11.

Le premier mode de réalisation de l'ensemble 1 apparaît plus précisément sur les figures 1 à 6.

Comme le montre plus particulièrement la figure 6, selon une caractéristique particulièrement avantageuse, au moins une des pattes d'encliquetage 110 de la plaque de finition 10 présente une fente 113 qui la sépare en deux parties 118, 119 dans le sens de la hauteur, de telle manière que ces deux parties 118, 119 sont principalement aptes à se déformer élastiquement en flexion dans un même sens par rapport audit plan médian de référence P1.

Dans ce mode de réalisation, les pattes d'encliquetage 110 sont toutes identiques. Il est donc prévu une fente 113 dans chacune des pattes d'encliquetage 110 de la plaque de finition 10.

La fente 113 est par ailleurs prévue de telle manière que chaque partie 118, 119 de la patte d'encliquetage 110 porte une partie de chaque cran 112 ; 212 ; 312 ; 412.

Comme le montre la figure 4, la fente 113 de chaque patte d'encliquetage 110 s'étend suivant l'axe longitudinal A1, sur au moins 50 % de la hauteur de cette patte d'encliquetage 110. Elle s'étend ici plus précisément sur toute la hauteur de cette patte d'encliquetage 110, depuis la tranche arrière de la languette flexible 111 jusqu'au rebord périphérique intérieur 16 du cadre 11 de la plaque de finition 10. Cette fente 113 débouche donc à l'arrière de la languette flexible 111.

Cette fente 113 présente une largeur constante, comprise entre 5% et 50% de la largeur de la patte d'encliquetage 110. Sur la figure 4, cette largeur est représentée comme étant égale à 10% de la largeur de la patte d'encliquetage 110, tandis que sur la figure 6, elle est représentée comme étant égale à 30 % de la largeur de la patte d'encliquetage 110.

On observe sur les figures 4 et 6 que la largeur de chaque partie 118, 119 de la patte d'encliquetage 110 demeure au moins une fois et demi supérieure à l'épaisseur de la languette flexible 111. Cette largeur est ici environ trois fois supérieure à l'épaisseur de la languette flexible 111.

De cette manière, chaque partie 118, 119 de la patte d'encliquetage 110 est plus particulièrement conçue pour se déformer en flexion vers l'intérieur ou l'extérieur du cadre 11, en s'écartant du plan médian de référence P1, comme cela est illustré par la flèche représentée sur la figure 4.

Comme le montre la figure 4, la zone de liaison 110B entre la patte d'encliquetage 110 et le rebord périphérique intérieur 16 du cadre 11 forme donc une sorte d'articulation autour de laquelle chaque partie de la patte d'encliquetage 110 peut fléchir.

On observe par ailleurs sur la figure 4 que dans ce mode de réalisation, la face avant 112B de chaque cran 112 de chaque patte d'encliquetage 110 s'étend en longueur orthogonalement à l'axe longitudinal A1, et s'étend plus précisément dans un plan parallèle à la face arrière 10B du cadre 11 de la plaque de finition 10.

Comme le montre plus particulièrement la figure 2, chaque partie d'accrochage 120 du support d'appareillage 20 présente une forme correspondante.

Ici, chaque partie d'accrochage 120 est formée d'une embase 121, d'une nervure 122, et d'un ergot 123.

L'embase 121 est constituée par un renflement sur la face avant du cadre 21 du support d'appareillage 20, de forme parallélépipédique, qui s'étend en longueur le long du bord périphérique intérieur 23 du cadre 21.

La nervure 122 de la partie d'accrochage 120 s'étend alors à partir de la face interne de l'embase 121, en longueur le long de celle-ci. Cette nervure 122 présente une longueur sensiblement égale à la longueur des crans 112 des pattes d'encliquetage 110.

La nervure 122 présente ici une section transversale de forme triangulaire.

Comme le montre la figure 2, elle présente ainsi une face avant 122A inclinée vers l'intérieur du cadre 21, qui forme une pente sur laquelle peuvent s'appuyer les faces arrière en pente des crans 112 des pattes d'encliquetage 110 ; 210; 310; 410 lors du montage de la plaque de finition 10 sur le support d'appareillage 20.

Elle présente en outre une face arrière 122B tournée vers la face avant du cadre 21 et parallèle à celle-ci, adaptée à coopérer avec les faces arrière des crans 112 des pattes d'encliquetage 110 pour fixer rigidement la plaque de finition 10 au support d'appareillage 20.

L'ergot 123 est quant à lui prévu en saillie de la face interne de l'embase 121, au centre de celle-ci, et donc en saillie de la nervure 122. Cet ergot 123 présente ici, vu de l'avant, une forme de triangle dont la base se raccroche à l'embase 121 et dont le sommet pointe vers l'intérieur du cadre 21. La largeur à la base de ce triangle est supérieure à la largeur des fentes 113 des pattes d'encliquetage 110 de la plaque de finition 10.

Comme le montrent les figures 5 et 6, lors du montage de la plaque de finition 10 sur le support d'appareillage 20, l'installateur positionne sensiblement la plaque de finition 10 dans l'axe du support d'appareillage 20, de telle sorte que les pattes d'encliquetage 110 de la plaque de finition puissent s'engager sur les parties d'accrochage 120 prévues en correspondance sur le support d'appareillage 20.

Les faces arrière 122A en pente des crans 112 des pattes d'encliquetage 110 viennent alors en appui contre les faces avant 112A en pente des nervures 122 des parties d'accrochage 120, tandis que les fentes 113 des pattes d'encliquetage 110 s'engagent sur les ergots 123 des parties d'accrochage 120.

La coopération des faces en pente des crans 112 et des nervures 122 permet, sous l'effet de l'effort appliqué par l'installateur sur la plaque de finition 10 en direction du support d'appareillage 20, de faire fléchir les pattes d'encliquetage 110 vers l'intérieur.

La coopération des fentes 113 et des ergots 123 permet quant à elle d'assurer un parfait centrage des pattes d'encliquetage 110 sur les parties d'accrochage 120, et donc de placer l'axe principal A2 de la plaque de finition 10 sur l'axe principal A0 du support d'appareillage 20.

Les deux parties des pattes d'encliquetage 110 ne sont en effet pas prévues pour s'écarter élastiquement l'une de l'autre sous l'effet d'une simple poussée exercée par l'installateur sur la plaque de finition 10. Ainsi, lorsque les deux côtés de l'ergot 123 viennent simultanément en appui contre les deux côtés de la fente 113, ils repoussent légèrement les deux parties des pattes d'encliquetage non pas dans des directions opposées, mais dans une même direction, vers l'intérieur du cadre 11, ce qui assure un centrage rigide de la plaque de finition 10 sur le support d'appareillage 20.

L'utilisation de plusieurs crans 112, ici au nombre de trois, sur chaque patte d'encliquetage 110 permet par ailleurs d'installer la plaque de finition 10 à trois hauteurs différentes par rapport au support d'appareillage 20, de manière que son rebord périphérique extérieur 15 puisse venir en appui contre la paroi dans laquelle est encastrée, quelle que soit la profondeur de la boîte murale dans la cavité ménagée dans la paroi.

Sur la figure 4, la fente 113 s'étend dans toute l'épaisseur de la languette flexible 111 (autrement formulé, elle s'ouvre sur sur les deux faces principales de la languette flexible), si bien que les deux parties 118, 119 de la languette flexible 111 sont disjointes.

En variante, on pourrait prévoir que la fente s'étende dans une partie seulement de l'épaisseur de la languette flexible (en d'autres termes, elle ne s'ouvrirait que sur l'une des deux faces principales de la languette flexible). Elle formerait alors simplement un renfoncement en creux dans l'une ou l'autre des deux faces principales de la languette flexible, qui déboucherait sur la tranche arrière de la languette flexible.

De cette manière, les deux parties de la languette flexible seraient seulement partiellement dissociées et la fente délimiterait un canal d'engagement pour l'ergot correspondant du support d'appareillage.

On comprend que dans cette variante, la languette flexible conserverait ses deux fonctions principales, à savoir sa fonction de flexion pour permettre l'encliquetage de ses crans sur les nervures du support d'appareillage et sa fonction d'accueil de l'ergot pour le centrage de la plaque d'habillage par rapport au support d'appareillage.

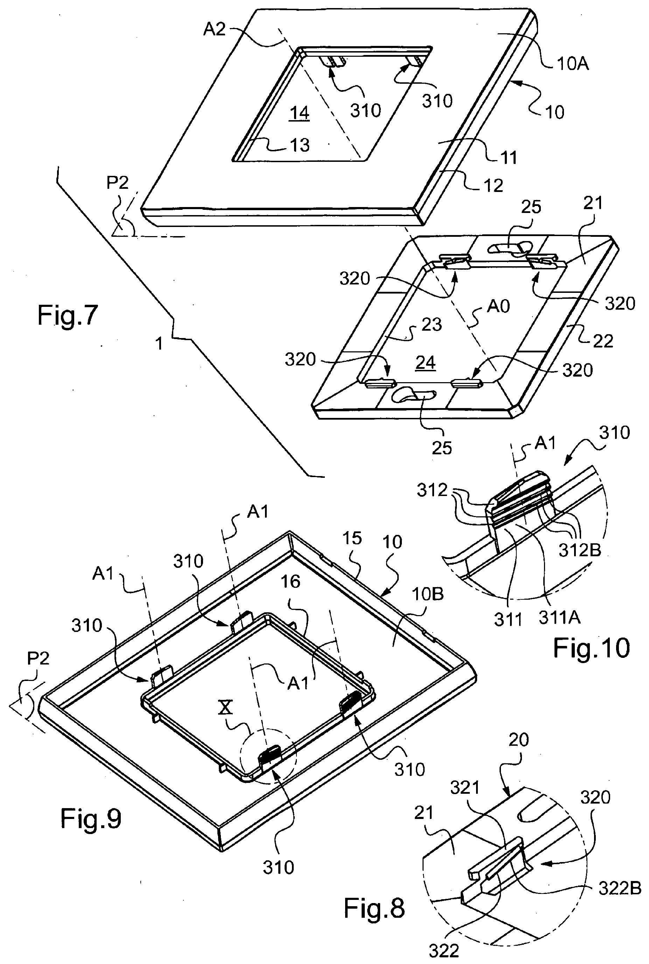

Le second mode de réalisation de l'ensemble 1 apparaît plus précisément sur les figures 7 à 10.

Selon une caractéristique particulièrement avantageuse de ce second mode de réalisation de l'invention, une partie au moins de chaque cran 312 d'au moins une des quatre pattes d'encliquetage 310 de la plaque de finition 10 s'étend en longueur suivant une direction oblique par rapport à l'axe longitudinal A1 de cette patte d'encliquetage 310.

Par oblique, on entend que les crans 312 s'étendent en longueur suivant une direction qui n'est ni parallèle, ni orthogonale à l'axe longitudinal A1.

Dans ce mode de réalisation, il n'est prévu de fente dans aucune des pattes d'encliquetage 310.

Le centrage de la plaque de finition 10 sur le support d'appareillage 20 est alors assuré par les crans 312 eux-mêmes, qui sont à cet effet inclinés par rapport à l'axe longitudinal A1.

Dans ce mode de réalisation, les faces avant 312B des crans 312 de chaque patte d'encliquetage 310 sont toutes planes et parallèles entre elles. Elles sont inclinées par rapport à l'axe longitudinal A1 d'un angle compris entre 60 et 85 degrés, ici égal à 80 degrés.

Les faces avant 312B des crans 312 de chaque patte d'encliquetage 310 sont en revanche inclinées par rapport aux faces avant des crans de l'autre patte d'encliquetage de la même paire de pattes d'encliquetage, suivant des sens opposés. On observe ainsi sur la figure 9 que les crans 312 des pattes d'encliquetage 310 d'une même paire s'étendent en longueur suivant des directions différentes.

Sur les figures 7 et 8, on observe par ailleurs que les parties d'accrochage 320 prévues sur le support d'appareillage 20 comportent chacune une embase 321 identique à l'embase 121 représentée sur la figure 2, ainsi qu'une nervure 322 qui diffère de la nervure 122 représentée sur la figure 2 en ce qu'elle s'étend en longueur suivant une direction inclinée de 10 degrés par rapport au plan du cadre 21. Dans ce mode de réalisation, les parties d'accrochage 320 sont en revanche dépourvues d'ergot. On observe sur la figure 7 que les nervures 322 des parties d'accrochage 320 d'une même paire s'étendent en longueur suivant des directions différentes, de manière à pouvoir se fixer aux crans 312 des pattes d'encliquetage 310.

Ainsi, lorsque la plaque de finition 10 est rapportée sur le support d'appareillage 20, les faces avant 312B des crans 312 des pattes d'encliquetage 310 viennent se plaquer entièrement contre les faces arrière 322B des nervures 322 des parties d'accrochage 320.

Puisque ces crans 312 et ces nervures 322 sont inclinés dans des directions différentes, ils permettent de forcer la plaque de finition 10 à se centrer sur le support d'appareillage 20, et l'empêchent de se déplacer latéralement.

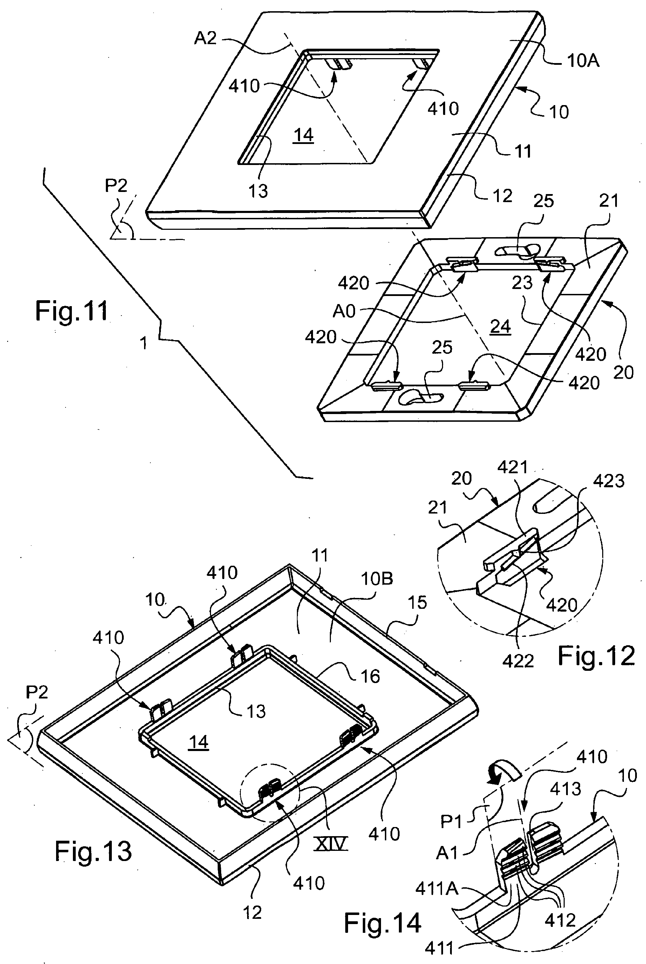

Le troisième mode de réalisation de l'ensemble 1 apparaît plus précisément sur les figures 11 à 14.

Dans ce mode de réalisation, les pattes d'encliquetage 410 présentent des formes identiques à celles des pattes d'encliquetage 310 représentées sur les figures 7 à 10, à la différence près qu'elles présentent chacune une fente 413 identique aux fentes 113 décrites supra et représentées sur les figures 1 à 6.

En correspondance, les parties d'accrochage 420 prévues sur le support d'appareillage 20 sont identiques aux parties d'accrochage 320 représentées sur la figure 10 (avec une embase 421 et une nervure 422 inclinée), à la différence près qu'elles comportent chacune un ergot 423 identique à l'ergot 123 décrit supra et représenté sur la figure 2.

Dans ce troisième mode de réalisation, on comprend donc que le centrage de la plaque de finition 10 sur le support d'appareillage 20 est assuré non seulement par la coopération des crans 412 et des nervures 422 qui sont inclinés, mais également par la coopération de la fente 413 avec l'ergot 423.

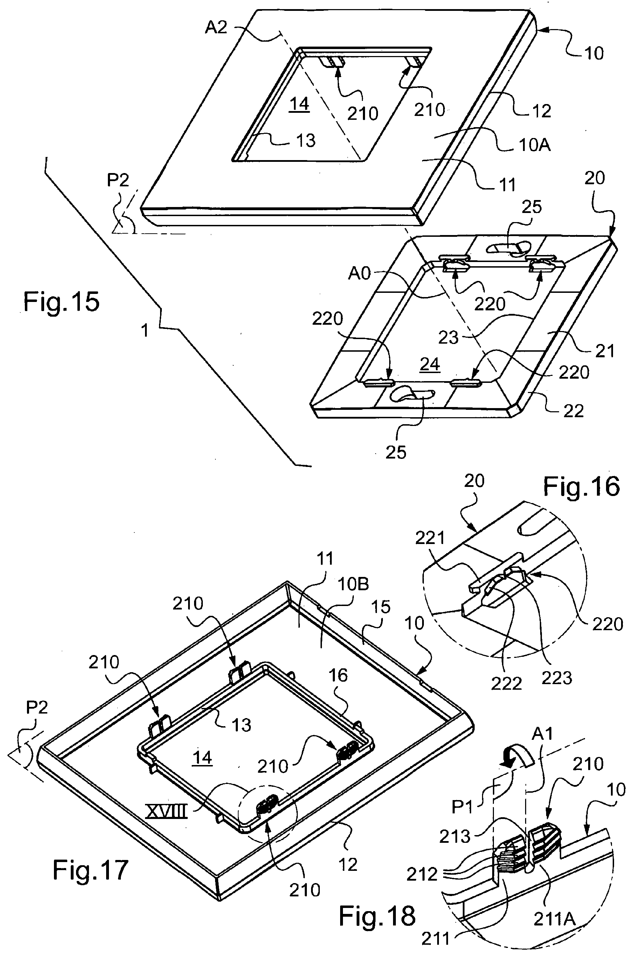

Le quatrième mode de réalisation de l'ensemble 1 apparaît plus précisément sur les figures 15 à 18.

Dans ce mode de réalisation, les pattes d'encliquetage 210 de la plaque de finition 10 sont toutes identiques.

Elles présentent notamment chacune une fente 213 identique à celles décrites supra et représentées sur les figures 1 à 6.

En revanche, dans ce mode de réalisation, les crans 212 de ces pattes d'encliquetage 210 ne s'étendent pas en longueur suivant des directions rectilignes, si bien que leurs faces avant ne sont pas plates.

Les trois crans 212 portés par chaque patte d'encliquetage 210 présentent ainsi chacun trois parties situées dans le prolongement les unes des autres, dont une partie centrale s'étendant en longueur suivant une première direction parallèle au plan du cadre 11, et deux parties latérales s'étendant en longueur de part et d'autre de la partie centrale, suivant des seconde et troisième directions distinctes et non parallèles au plan du cadre 11.

La face avant de la partie centrale de chaque cran 212 est ainsi située dans un plan orthogonal à l'axe longitudinal A1, tandis que les faces avant des parties latérales de chaque cran 212 sont situées dans des plans inclinés par rapport à cet axe, dans des sens différents, d'un même angle ici égal à 80 degrés.

En correspondance, les parties d'accrochage 220 prévues sur le support d'appareillage 20 sont identiques à celles représentées sur la figure 2 (avec une embase 221, une nervure 222 et un ergot 223), à la différence près que leurs nervures 222 ne sont pas rectilignes mais présentent chacune une partie centrale et deux parties latérales.

La face arrière de la partie centrale de chaque nervure 222 est ainsi située dans un plan parallèle au plan du cadre 20, tandis que les faces arrière des parties latérales de chaque nervure 222 sont situées dans des plans inclinés par rapport à ce plan, dans des sens différents, d'un même angle ici égal à 10 degrés.

Ainsi, lorsque la plaque de finition 10 est rapportée sur le support d'appareillage 20, les faces avant des crans 212 des pattes d'encliquetage 210 viennent se plaquer entièrement contre les faces arrière des nervures 222 des parties d'accrochage 220.

Dans ce quatrième mode de réalisation, on comprend donc que le centrage de la plaque de finition 10 sur le support d'appareillage 20 est assuré non seulement par la coopération des parties latérales des crans 212 et des nervures 222 qui sont inclinées, mais également par la coopération de la fente 213 avec l'ergot 223.

## Revendications

1. Plaque de finition (10) pour appareillage électrique comportant un cadre (11) qui délimite une ouverture centrale (14) et qui présente une face arrière (10B) à partir de laquelle s'étendent des pattes d'encliquetage (110 ; 210 ; 410) perpendiculairement à celle-ci, chaque patte d'encliquetage (110; 210 ; 410) comportant :
- une languette flexible (111 ; 211 ; 411) s'étendant selon un plan médian de référence (P1) et présentant une face (111A ; 211A ; 411A) parallèle audit plan médian de référence (P1), et
- au moins un cran (112 ; 212 ; 412) qui s'étend en longueur suivant la largeur de ladite languette flexible (111 ; 211 ; 411) et qui présente une surface d'accrochage tournée vers un plan moyen (P2) de ladite face arrière (10B) et faisant saillie de ladite face (111A ; 211A; 411A) pour accrocher ledit cran (112 ; 212 ; 412) à un élément interne (20) dudit appareillage électrique,
**caractérisée en ce que** l'une au moins desdites pattes d'encliquetage (110; 210; 410) présente une fente (113; 213 ; 413) qui la sépare en deux parties dans le sens de la hauteur, de telle manière que lesdites deux parties portent chacune une partie de chaque cran (112 ; 212 ; 412) et que ces deux parties sont principalement aptes à se déformer élastiquement en flexion dans un même sens par rapport audit plan médian de référence (P1).

2. Plaque de finition (10) selon la revendication 1, dans laquelle ladite fente (113 ; 213 ; 413) s'étend sur au moins 50 % de la hauteur de ladite patte d'encliquetage (110 ; 210 ; 410).

3. Plaque de finition (10) selon l'une des revendications 1 et 2, dans laquelle ladite fente (113 ; 213 ; 413) présente une largeur constante.

4. Plaque de finition (10) selon l'une des revendications 1 à 3, dans laquelle ladite fente (113 ; 213 ; 413) s'étend en largeur sur 5% à 50% de la largeur de ladite patte d'encliquetage (110 ; 210 ; 410).

5. Plaque de finition (10) selon l'une des revendications 1 à 4, dans laquelle il est prévu une fente (113 ; 213 ; 413) dans chaque patte d'encliquetage (110 ; 210 ; 410).

6. Plaque de finition (10) selon l'une des revendications 1 à 5, dans laquelle la largeur de chaque partie de ladite patte d'encliquetage (110 ; 210 ; 410) est au moins une fois et demi supérieure à l'épaisseur de cette partie de ladite patte d'encliquetage (110 ; 210 ; 410).

7. Plaque de finition (10) selon l'une des revendications 1 à 6, dans laquelle, chaque languette flexible (111) s'étendant en hauteur selon un axe longitudinal (A1), la surface d'accrochage de chaque cran (112) de chaque patte d'encliquetage (110) s'étend en longueur parallèlement audit axe longitudinal (A1).

8. Plaque de finition (10) selon l'une des revendications 1 à 6, dans laquelle, chaque languette flexible (211 ; 411) s'étendant en hauteur selon un axe longitudinal (A1), une partie au moins de la surface d'accrochage de chaque cran (212 ; 412) d'au moins une desdites pattes d'encliquetage (210 ; 410) s'étend en longueur de manière oblique par rapport audit axe longitudinal (A1).

9. Plaque de finition (10) pour appareillage électrique comportant une face arrière (10B) à partir de laquelle s'étendent des pattes d'encliquetage (200 ; 300 ; 400) perpendiculairement à celle-ci, chaque patte d'encliquetage (200 ; 300 ; 400) comportant :
- une languette flexible (211 ; 311 ; 411) s'étendant en hauteur selon un axe longitudinal (A1) et présentant une face (211A; 311A; 411 A) parallèle audit axe longitudinal (A1), et
- au moins un cran (212 ; 312 ; 412) qui s'étend en longueur suivant la largeur de ladite languette flexible (211 ; 311 ; 411) et qui présente une surface d'accrochage tournée vers un plan moyen (P2) de ladite face arrière (10B) et faisant saillie de ladite face (211A ; 311 A ; 411 A) pour accrocher ledit cran (212 ; 312 ; 412) à un élément interne (20) dudit appareillage électrique,
**caractérisée en ce que** une partie au moins de chaque cran (212 ; 312 ; 412) d'au moins une desdites pattes d'encliquetage (200 ; 300 ; 400) s'étend en longueur suivant une direction oblique par rapport à l'axe longitudinal (A1) de ladite patte d'encliquetage (200 ; 300 ; 400).

10. Plaque de finition (10) selon la revendication 9, dans laquelle les crans (312 ; 412) d'au moins deux pattes d'encliquetage (300 ; 400) s'étendent en longueur de manière rectiligne suivant des directions obliques par rapport à l'axe longitudinal (A1) de ladite patte d'encliquetage (300 ; 400), la direction de chaque cran (312 ; 412) de l'une desdites pattes d'encliquetage (300 ; 400) étant oblique par rapport à la direction de chaque cran (312 ; 412) de l'autre des pattes d'encliquetage (300 ; 400).

11. Plaque de finition (10) selon la revendication 9, dans laquelle chaque cran (212) de ladite patte d'encliquetage (200) présente deux parties qui s'étendent en longueur suivant des directions obliques l'une par rapport à l'autre et par rapport à l'axe longitudinal (A1).

12. Plaque de finition (10) selon l'une des revendications 9 à 11, dans laquelle la surface d'accrochage de chaque cran (212 ; 312 ; 412) de ladite patte d'encliquetage (200 ; 300 ; 400) s'étend perpendiculairement à la face (211A ; 311A; 411A) de la languette flexible (211; 311; 411) de ladite patte d'encliquetage (200 ; 300 ; 400).

13. Plaque de finition (10) selon l'une des revendications 9 à 12, dans laquelle au moins une patte d'encliquetage (210 ; 410) présente un plan médian de référence (P1) parallèle à sa face (211A ; 411A) et une fente (213 ; 413) qui la sépare en deux parties dans le sens de la hauteur, de telle manière que lesdites deux parties sont principalement aptes à se déformer élastiquement en flexion dans un même sens par rapport audit plan médian de référence (P1).

14. Appareillage électrique comportant un support d'appareillage (20) et une plaque de finition (10) selon l'une des revendications précédentes, dont les crans (112 ; 212 ; 312 ; 412) de chaque patte d'encliquetage (100 ; 200 ; 300 ; 400) sont adaptés à s'accrocher à des parties d'accrochage (120 ; 220 ; 320 ; 420) prévus en correspondance sur le support d'appareillage (20).

## Patentansprüche

1. Abdeckplatte (10) für elektrisches Gerät mit einem Rahmen (11), der eine zentrale Öffnung (14) aufweist und der eine Rückseite (10B) hat, von der aus sich Rastklauen (110; 210; 410) senkrecht zu dieser erstrecken, wobei jede Rastklaue (110; 210; 410)
- eine flexible Zunge (111; 211; 411), die sich entlang einer mittleren Bezugsebene (P1) erstreckt und eine zur besagten mittleren Bezugsebene (P1) parallele Fläche (111A; 211 A; 411 A) aufweist,
- wenigstens einen Zahn (112; 212; 412), der sich in der Länge längs der Breite der flexiblen Zunge (111; 211; 411) erstreckt und der eine Oberfläche zum Festhaken aufweist, die zu einer mittleren Ebene (P2) der besagten Rückseite (10B) gerichtet ist und aus der Fläche (111A; 211A; 411A) hervorragt, um den Zahn (112; 212; 412) an einem inneren Element (20) des elektrischen Geräts festzuhaken,
aufweist,
**dadurch gekennzeichnet, daß** wenigstens eine der Rastklauen (110; 210; 410) einen Spalt (113; 213; 413) aufweist, der diese in der Höhe in zwei Teile teilt, so daß jeder der beiden Teile einen Teil von jedem Zahn (112; 212; 412) trägt, und dadurch, daß die beiden Teile im Wesentlichen geeignet sind, sich gegenüber der mittleren Bezugsebene (P1) elastisch in derselben Richtung zu verbiegen.

2. Abdeckplatte (10) gemäß Anspruch 1, bei der sich der Spalt (113; 213; 413) über wenigstens 50 % der Höhe der Rastklaue (110; 210; 410) erstreckt.

3. Abdeckplatte (10) gemäß einem der Ansprüche 1 und 2, bei der der Spalt (113; 213; 413) eine konstante Breite aufweist.

4. Abdeckplatte (10) gemäß einem der Ansprüche 1 bis 3, bei der sich der Spalt (113; 213; 413) in der Breite über 5 % bis 50 % der Breite der besagten Rastklaue (110; 210; 410) erstreckt.

5. Abdeckplatte (10) gemäß einem der Ansprüche 1 bis 4, bei der in jeder Rastklaue (110; 210; 410) ein Spalt (113; 213; 413) vorgesehen ist.

6. Abdeckplatte (10) gemäß einem der Ansprüche 1 bis 5, bei der die Breite jedes Teils der Rastklaue (110; 210; 410) wenigstens anderthalb mal größer als die Dicke dieses Teils der Rastklaue (110; 210; 410) ist.

7. Abdeckplatte (10) gemäß einem der Ansprüche 1 bis 6, bei der sich, wenn sich jede flexible Zunge (111) in der Höhe entlang einer Längsachse (A1) erstreckt, die Oberfläche zum Festhaken jedes Zahns (112) jeder Rastklaue (110) in der Länge parallel zur Längsachse (A1) erstreckt.

8. Abdeckplatte (10) gemäß einem der Ansprüche 1 bis 6, bei der, wenn sich jede flexible Zunge (211; 411) in der Höhe entlang einer Längsachse (A1) erstreckt, wenigstens ein Teil der Oberfläche zum Festhaken jedes Zahns (212; 412) wenigstens einer der Rastklauen (210; 410) in der Länge schräg zur Längsachse (A1) erstreckt.

9. Abdeckplatte (10) für elektrisches Gerät mit einer Rückseite (10B), von der aus sich Rastklauen (200; 300; 400) senkrecht zu dieser erstrecken, wobei jede Rastklaue (200; 300; 400)
- eine flexible Zunge (211; 311; 411), die sich in der Höhe entlang einer Längsachse (A1) erstreckt und eine zur besagten Längsachse (A1) parallele Fläche (211A; 311A; 411A) aufweist, und
- wenigstens einen Zahn (212; 312; 412), der sich in der Länge längs der Breite der flexiblen Zunge (211; 311; 411) erstreckt und der eine Oberfläche zum Festhaken aufweist, die zu einer mittleren Ebene (P2) der besagten Rückseite (10B) gerichtet ist und aus der Fläche (211A; 311A; 411A) hervorragt, um den Zahn (212; 312; 412) an einem inneren Element (20) des elektrischen Geräts festzuhaken,
aufweist,
**dadurch gekennzeichnet, daß** sich wenigstens ein Teil jedes Zahns (212; 312; 412) wenigstens einer der Rastklauen (200; 300; 400) in der Länge in einer zur Längsachse (A1) der Rastklaue (200; 300; 400) schrägen Richtung erstreckt.

10. Abdeckplatte (10) gemäß Anspruch 9, bei der sich die Zähne (312; 412) wenigstens zweier der Rastklauen (300; 400) in der Länge geradlinig in zur Längsachse (A1) der Rastklaue (300; 400) schrägen Richtungen erstrecken, wobei die Richtung jedes Zahns (312; 412) der einen der Rastklauen (300; 400) zur Richtung jedes Zahns (312; 412) der anderen der Rastklauen (300; 400) schräg ist.

11. Abdeckplatte (10) gemäß Anspruch 9, bei der jeder Zahn (212) der Rastklaue (200) zwei Teile aufweist, die sich in der Länge in zwei zueinander und zur Längsachse (A1) schrägen Richtungen erstrecken.

12. Abdeckplatte (10) gemäß einem der Ansprüche 9 bis 11, bei der sich die Oberfläche zum Festhaken jedes Zahns (212; 312; 412) der Rastklaue (200; 300; 400) senkrecht zur Fläche (211A; 311A; 411A) der flexiblen Zunge (211; 311; 411) der Rastklaue (200; 300; 400) erstreckt.

13. Abdeckplatte (10) gemäß einem der Ansprüche 9 bis 12, bei der wenigstens eine der Rastklauen (210; 410) eine zu deren Fläche (211A; 411A) parallele mittlere Bezugsebene (P1) und einen Spalt (213; 413) aufweist, der diese in der Höhe in zwei Teile teilt, so daß jeder der beiden Teile im Wesentlichen geeignet sind, sich gegenüber der mittleren Bezugsebene (P1) elastisch in derselben Richtung zu verbiegen.

14. Elektrisches Gerät, das einen Geräteträger (20) und eine Abdeckplatte (10) gemäß einem der vorangehenden Ansprüche aufweist, bei der die Zähne (112; 212; 312; 412) jeder Rastklaue (100; 200; 300; 400) dazu ausgelegt sind, sich an Festhakteilen (120; 220; 320; 420) festzuhaken, die entsprechend auf dem Geräteträger (20) vorgesehen sind.

## Claims

1. A finishing plate (10) for an electrical accessory, the finishing plate comprising a frame (11) that defines a central opening (14) and that presents a rear face (10B) from which snap-fastener tabs (110; 210; 410) extend perpendicularly thereto, each snap-fastener tab (110; 210; 410) comprising:
- a flexible tongue (111; 211; 411) that extends along a reference mid-plane (P1) and that presents a face (111A; 211A; 411A) that is parallel to said reference mid-plane (P1); and
- at least one notch (112; 212; 412) that extends, lengthwise, along the width of said flexible tongue (111; 211; 411) and that presents a catch surface that faces towards a mean plane (P2) of said rear face (10B) and that projects from said face (111A; 211A; 411A) so as to catch said notch (112; 212; 412) on an internal element (20) of said electrical accessory;
the finishing plate being **characterized in that** at least one of said snap-fastener tabs (110; 210; 410) presents a slot (113; 213; 413) that separates it in its height direction into two portions, so that each of said two portions carries a portion of each notch (112; 212; 412), and so that the two portions are mainly suitable for deforming elastically by flexing in a single direction relative to said reference mid-plane (P1).

2. A finishing plate (10) according to claim 1, wherein said slot (113; 213; 413) extends over at least 50% of the height of said snap-fastener tab (110; 210; 410).

3. A finishing plate (10) according to claim 1 or claim 2, wherein said slot (113; 213; 413) presents a width that is constant.

4. A finishing plate (10) according to any one of claims 1 to 3, wherein said slot (113; 213; 413) extends, widthwise, over 5% to 50% of the width of said snap-fastener tab (110; 210; 410).

5. A finishing plate (10) according to any one of claims 1 to 4, wherein a slot (113; 213; 413) is provided in each snap-fastener tab (110; 210; 410).

6. A finishing plate (10) according to any one of claims 1 to 5, wherein the width of each portion of said snap-fastener tab (110; 210; 410) is at least one and a half times greater than the thickness of the portion of said snap-fastener tab (110; 210; 410).

7. A finishing plate (10) according to any one of claims 1 to 6, wherein each flexible tongue (111) extends, heightwise, along a longitudinal axis (A1), the catch surface of each notch (112) of each snap-fastener tab (110) extends, lengthwise, parallel to said longitudinal axis (A1).

8. A finishing plate (10) according to any one of claims 1 to 6, wherein, each flexible tongue (211; 411) extends, heightwise, along a longitudinal axis (A1), and at least a portion of the catch surface of each notch (212; 412) of at least one of said snap-fastener tabs (210; 410) extends, lengthwise, sloping relative to said longitudinal axis (A1).

9. A finishing plate (10) for an electrical accessory, the finishing plate including a rear face (10B) from which snap-fastener tabs (200; 300; 400) extend perpendicularly thereto, each snap-fastener tab (200; 300; 400) comprising:
• a flexible tongue (211; 311; 411) that extends, heightwise, along a longitudinal axis (A1) and that presents a face (211A; 311A; 411A) that is parallel to said longitudinal axis (A1); and
• at least one notch (212; 312; 412) that extends lengthwise along the width of said flexible tongue (211; 311; 411) and that presents a catch surface that faces towards a mean plane (P2) of said rear face (10B) and that projects from said face (211A; 311A; 411A) so as to catch said notch (212; 312; 412) on an internal element (20) of said electrical accessory;
the finishing plate being **characterized in that** at least a portion of each notch (212; 312; 412) of at least one of said snap-fastener tabs (200; 300; 400) extends, lengthwise, along a sloping direction relative to the longitudinal axis (A1) of said snap-fastener tab (200; 300; 400).

10. A finishing plate (10) according to claim 9, wherein the notches (312; 412) of at least two snap-fastener tabs (300; 400) extend, lengthwise, in rectilinear manner along directions that slope relative to the longitudinal axis (A1) of said snap-fastener tab (300; 400), the direction of each notch (312; 412) of one of said snap-fastener tabs (300; 400) sloping relative to the direction of each notch (312; 412) of the other snap-fastener tabs (300; 400).

11. A finishing plate (10) according to claim 9, wherein each notch (212) of said snap-fastener tab (200) presents two portions that extend, lengthwise, along directions that slope relative to each other and relative to the longitudinal axis (A1).

12. A finishing plate (10) according to any one of claims 9 to 11, wherein the catch surface of each notch (212; 312; 412) of said snap-fastener tab (200; 300; 400) extends perpendicularly to the face (211A; 311A; 411A) of the flexible tongue (211; 311; 411) of said snap-fastener tab (200; 300; 400).

13. A finishing plate (10) according to any one of claims 9 to 12, wherein at least one snap-fastener tabs (210; 410) presents a reference mid-plane (P1) that is parallel to its face (211A; 411A), and a slot (213; 413) that separates it in its height direction into two portions, so that said two portions are mainly suitable for deforming elastically by flexing in a single direction relative to said reference mid-plane (P1).

14. An electrical accessory including an accessory support (20) and a finishing plate (10) according to any preceding claim, in which the notches (112; 212; 312; 412) of each snap-fastener tab (100; 200; 300; 400) are adapted to catch on corresponding catch portions (120; 220; 320; 420) provided on the accessory support (20).
